# EUROPÄISCHE PATENTSCHRIFT

(11) **EP 1 000 816 B1**
(45) Veröffentlichungstag und Bekanntmachung des Hinweises auf die Patenterteilung: **14.07.2004**
(21) Anmeldenummer: 99120298.7
(22) Anmeldetag: 12.10.1999
(51) Int. Cl.: B60R 21/20

(54) **Airbagmodulgehäuse**
Airbag module housing
Boîtier de module de coussin gonflable de sécurité

(30) Priorität: 11.11.1998 DE 19851975
(43) Veröffentlichungstag der Anmeldung: 17.05.2000
(73) Patentinhaber: DaimlerChrysler AG, 70567 Stuttgart (DE)
(72) Erfinder: Bossenmaier, Alban, 71126 Gäufelden-Nebringen (DE); Henkel, Jörg, 73033 Göppingen (DE); Reiter, Friedrich, 71069 Sindelfingen (DE); Rudolf, Harald, 72072 Tübingen (DE); Steiner, Martin, 71120 Grafenau (DE)

(56) Entgegenhaltungen:
- EP-B- 0 734 914
- US-A- 5 342 082
- US-A- 5 533 747
- PATENT ABSTRACTS OF JAPAN vol. 014, no. 407 (M-1019), 4. September 1990 (1990-09-04) -& JP 02 155855 A (TOYOTA MOTOR CORP), 14. Juni 1990 (1990-06-14)

## Beschreibung

Die Erfindung betrifft ein Airbagmodulgehäuse für ein Kraftfahrzeug, mit einem länglichen Gehäusegrundkörper, der zur Aufnahme eines Gasgenerators und eines Airbags dient und der seitlich durch zwei Seitendeckel verschlossen ist, wobei das Airbagmodulgehäuse beim Aufprall eines Körperteils, insbesondere des Kopfes, eines Fahrzeuginsassen verformt wird.

Derartige Airbagmodulgehäuse sind bspw. aus der EP 0 666 203 A1, der US 5,395,133 und der US 5,342,082 bekannt. In der EP 0 666 203 A1 und der US 5,395,133 wird vorgeschlagen, e-nergieaufnehmende Elemente an den Kanten des Gehäusegrundkörpers anzubringen. Dadurch soll der Stoß beim Aufprall des Kopfes eines Fahrzeuginsassen gedämpft werden. In der US 5,342,082 soll das gleiche Ziel dadurch erreicht werden, dass in den Seitendeckeln ovalförmige Öffnungen ausgespart sind. Außerdem sind im Randbereich der Seitendeckel V-förmige Einschnitte angebracht.

Im Rahmen der vorliegenden Erfindung hat sich herausgestellt, dass eine Modifikation des Gehäusegrundkörpers allein nicht ausreicht, um eine ausreichende Verformung des Airbagmodulgehäuses zu gewährleisten. Die Ausbildung von Öffnungen oder V-förmigen Einschnitten in den Seitendeckeln birgt die Gefahr, dass sich der Luftsack beim Entfalten darin verhaken und reißen kann. Außerdem kann es passieren, dass die Seitendeckel in den Bereichen zwischen den Öffnungen bzw. Einschnitten beim Auftreten einer hohen Belastung brechen, wobei verletzungsträchtige Bruchkanten entstehen.

Zur Optimierung der Verformung des Airbagmodulgehäuses wird in der EP 0 734 914 B1 und der EP 0 818 361 A1 vorgeschlagen, einzelne Bereiche in dem Gehäusegrundkörper thermisch zu schwächen. Dadurch soll das Widerstandsmoment gezielt reduziert werden. Die thermische Schwächung einzelner Bereiche hat jedoch den Nachteil, dass ihre Güte bzw. das Vorhandensein nicht unbedingt zu erkennen ist. Die WO 91/14 110 betrifft ebenfalls die thermische Schwächung von energieaufnehmenden Strukturen.

In der US 5,533,747 sind Schlitze in einem Seitendeckel eines Airbagmodulgehäuses vorgesehen, die etwa in Aufprallrichtung ausgerichtet sind, um Energie bei einem Aufprall aufzunehmen.

Die **gattungsbildende** JP 2155855 A zeigt ein Airbagmodulgehäuse zur Aufnahme eines Airbags und eines Generators, der seitlich durch zwei Seitendeckel verschlossen ist. In den Seitendeckeln sind Schlitze vorgesehen, die sich im wesentlichen senkrecht zur erwarteten Aufprallrichtung über etwa die Hälfte des Seitendeckels bis zu einem Rand hin erstrecken. Bei einem Aufprall eines Insassen kann durch Verformung der Schlitze Energie absorbiert werden.

Aufgabe der Erfindung ist es, die Verformung des Airbagmodulgehäuses zu optimieren. Zudem soll das erfindungsgemäße Airbagmodulgehäuse einfach und kostengünstig herstellbar sein. Dabei sollen Beschädigungen des Airbags beim Entfalten verhindert werden. Insbesondere sollen die Kriterien der sogenannten Kopfaufschlagprüfung erfüllt werden.

Die Aufgabe ist bei einem Airbagmodulgehäuse für ein Kraftfahrzeug, mit einem länglichen Gehäusegrundkörper, der zur Aufnahme eines Gasgenerators und eines Airbags dient und der seitlich durch zwei Seitendeckel verschlossen ist, wobei das Airbagmodulgehäuse beim Aufprall eines Körperteils, insbesondere des Kopfes, eines Fahrzeuginsassens verformt wird, dadurch gelöst, dass in den Seitendeckeln jeweils mindestens ein Schlitz angebracht ist, der sich im Wesentlichen senkrecht zur erwarteten Aufprallrichtung des Körperteils über den größten Teil des jeweiligen Seitendeckels bis zum Rand erstreckt. Der Schlitz wird durch zwei aneinander anliegende Kanten des jeweiligen Seitendeckels gebildet. Diese Kanten bieten so gut wie keine Angriffsfläche für den Luftsack beim Entfalten. Das hat zur Folge, dass Beschädigungen des Luftsacks beim Entfalten sicher verhindert werden. Durch die Anordnung des Schlitzes im Wesentlichen senkrecht zur erwarteten Aufprallrichtung des Körperteils über den größten Teil des jeweiligen Seitendeckels wird der Widerstand des Seitendeckels gegen eine Verformung beim Aufprall abgebaut. Am Ende des Schlitzes stellt das noch verbliebende Material des Seitendeckels einen Drehbereich dar, um den sich die beiden durch den Schlitz getrennten Teile des Seitendeckels in der Art eines Scharniers drehen. Der Verdrehwiderstand kann durch die Menge des verbliebenen Materials des Seitendeckels bzw. die Länge des Schlitzes variiert werden.

Eine besondere Ausführungsart der Erfindung ist dadurch gekennzeichnet, dass der Schlitz durchgehend ausgebildet ist. Dadurch wird der Widerstand des Seitendeckels gegen eine Verformung im Bereich des Schlitzes praktisch auf Null reduziert.

Eine weitere besondere Ausführungsart der Erfindung ist dadurch gekennzeichnet, dass die Seitendeckel an einer Seite, vorzugsweise an der dem Gasgenerator abgewandten Seite des Schlitzes, leicht abgewinkelte Abschnitte aufweisen. Die abgewinkelten Abschnitte gewährleisten, dass die beiden durch den Schlitz voneinander getrennten Teile des Seitendeckels bei einer Verformung des Airbagmodulgehäuses aneinander vorbeigleiten.

Eine weitere besondere Ausführungsart der Erfindung ist dadurch gekennzeichnet, dass der Querschnitt des Gehäusegrundkörpers auf der Höhe des Schlitzes in den Seitendeckeln mindestens eine Ausbuchtung aufweist. Bei Seitendeckeln mit durchgehenden Schlitzen sind zwei gegenüberliegende Ausbuchtungen in dem Gehäusegrundkörper ausgebildet. Wenn die Schlitze in den Seitendeckeln nicht durchgehend ausgebildet sind, ist die Ausbuchtung nur auf der Seite des Schlitzes angeordnet. Die Ausbuchtung sorgt für eine definierte Verformung des Gehäusegrundkörpers. Die Ausbuchtung kann bspw. einen halbkreisförmigen oder einen dreiecksförmigen Querschnitt aufweisen. Alternativ könnte man auch eine thermische Schwächung einzelner Bereiche des Gehäusegrundkörpers vorsehen.

Eine weitere besondere Ausführungsart der Erfindung ist dadurch gekennzeichnet, dass die Wanddicke im Bereich der Ausbuchtung reduziert ist. Dadurch wird der Widerstand im Gehäusegrundkörper gegen eine Verformung reduziert.

Eine weitere besondere Ausführungsart der Erfindung ist dadurch gekennzeichnet, dass die Seitenteile mit Hilfe von Schrauben oder Nieten an dem Gehäusegrundkörper befestigt sind. Durch die Schrauben oder Nieten werden bei einer Verformung die Kräfte von dem Gehäusegrundkörper in die Seitendeckel eingeleitet. Das kann alternativ auch durch einen Formschluss zwischen dem Gehäusegrundkörper und den Seitendeckeln erreicht werden. Die genaue Plazierung der Schrauben oder Nieten bzw. des Formschlusses beeinflusst das Verformungsverhalten.

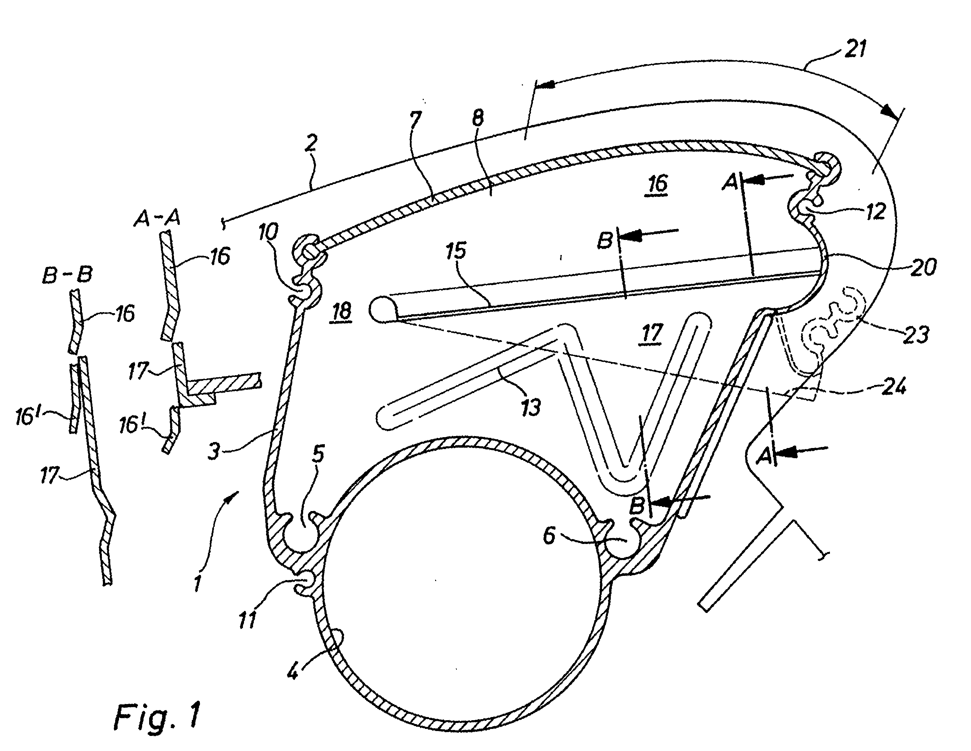

Weitere Vorteile, Merkmale und Einzelheiten der Erfindung ergeben sich aus der nachfolgenden Beschreibung, in der unter Bezugnahme auf die Zeichnung verschiedene Ausführungsbeispiele der Erfindung im Einzelnen beschrieben sind. In der Zeichnung zeigen die
- Figuren 1 bis 4: jeweils eine Ausführungsform des erfindungsgemäßen Airbagmodulgehäuses in teilweise geschnittener Darstellung.

In Figur 1 ist ein insgesamt mit 1 bezeichnetes Airbagmodulgehäuse in einer teilweise geschnittenen Seitenansicht dargestellt. Das Airbagmodulgehäuse 1 ist an einem Querträger unter einer Instrumententafel 2 und/oder an der Instrumententafel 2 selbst befestigt. Das Airbagmodulgehäuse 1 umfasst einen Gehäusegrundkörper 3 mit einem zylinderförmigen Teilbereich 4, der zur Aufnahme eines Gasgenerators dient. In dem Gehäusegrundkörper 3 sind zwei längliche Aussparungen 5 und 6 vorgesehen, die zur Aufnahme von (nicht gezeigten) Verankerungselementen eines Airbags dienen. Der Gehäusegrundkörper 3 ist an seiner Längsseite durch eine Abdeckung 7 zur Instrumententafel 2 hin verschlossen.

Seitlich ist der Gehäusegrundkörper 3 durch zwei Seitendeckel verschlossen, von denen man in Figur 1 nur einen sieht, der mit dem Bezugszeichen 8 versehen ist. Die Kontur des Seitendeckels 8 ist in Figur 1 nicht dargestellt, weil ansonsten der Querschnitt des Gehäusegrundkörpers 3 nicht zu sehen wäre. Die Befestigung des Seitendeckels 8 an den Gehäusegrundkörper 3 erfolgt durch (nicht dargestellte) Schrauben, die in länglichen Aussparungen 10, 11 und 12 in dem Gehäusegrundkörper 3 aufgenommen werden. Zur Stabilisierung des Seitendeckels 8 ist darin eine zick-zack-förmige Versickung 13 ausgebildet.

Durch einen Schlitz 15 ist der Seitendeckel 8 in zwei Teile 16 und 17 unterteilt, die bei 18 miteinander verbunden sind. An dem offenen Ende des Schlitzes 15 in dem Seitendeckel 8 ist in dem Gehäusegrundkörper 3 eine halbkreisförmige Ausbuchtung 20 mit einer reduzierten Dicke ausgebildet. Wenn in einem Bereich 21 bspw. der Kopf eines Fahrzeuginsassens aufschlägt, verformt sich der Gehäusegrundkörper 3, wie es bei 23 angedeutet ist. Der mit dem Gehäusegrundkörper 3 verbundene Seitendeckel 8 verformt sich dabei ebenfalls. Die Verformung des Seitendeckels 8 sieht so aus, dass der Teil 16 des Seitendeckels 8 über den Teil 17 des Seitendeckels 8 gleitet, wie bei 24 angedeutet ist.

In denen der Verdeutlichung dienenden Schnittansichten A-A, B-B ist die ursprüngliche Position des ersten Teils des Seitendeckels 8 mit 16 und die Position nach der Verformung mit 16' bezeichnet. In den Schnittansichten A-A und B-B sieht man des Weiteren, dass der erste Teil 16 des Seitendeckels 8 an der Schlitzkante leicht abgewinkelt abgebildet ist. Dadurch wird das Aneinandergleiten der Teile 16 und 17 des Seitendeckels 8 verbessert.

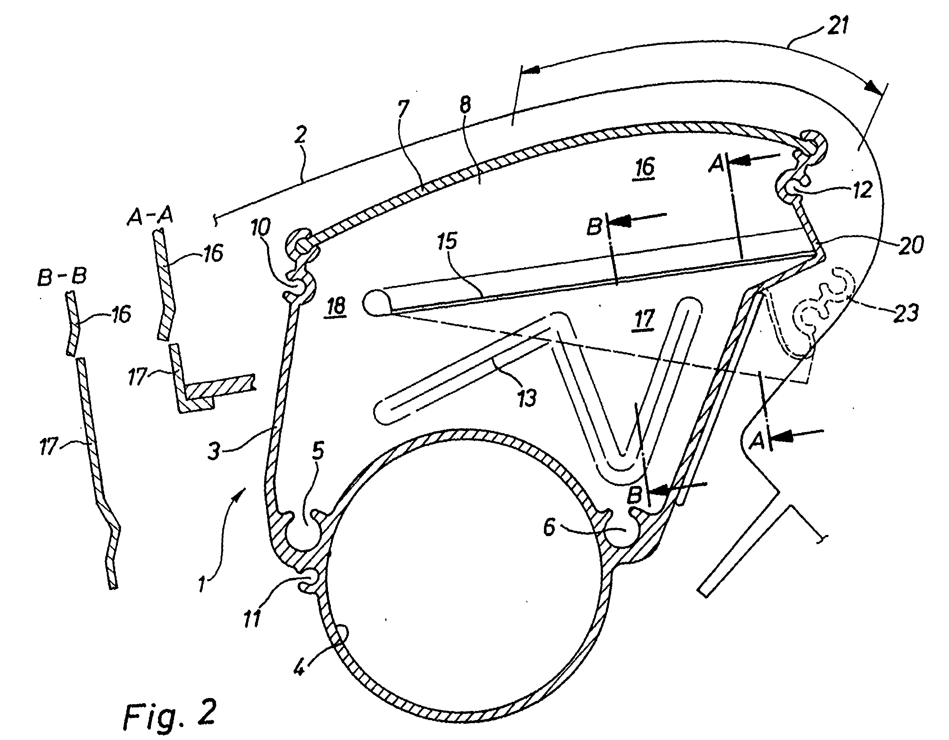

Die in Figur 2 dargestellte zweite Ausführungsform eines erfindungsgemäßen Airbagmodulgehäuses 1 ähnelt der in Figur 1 dargestellten Ausführungsform. Der Einfachheit halber werden zur Bezeichnung gleicher Teile dieselben Bezugszeichen verwendet. Um Wiederholungen zu vermeiden, wird auf die vorangegangene Beschreibung der Figur 1 verwiesen. Im Unterschied zu der in Figur 1 dargestellten Ausführungsform ist bei der in Figur 2 dargestellten Ausführungsform die Ausbuchtung 20 nicht halbkreisförmig sondern dreiecksförmig ausgebildet.

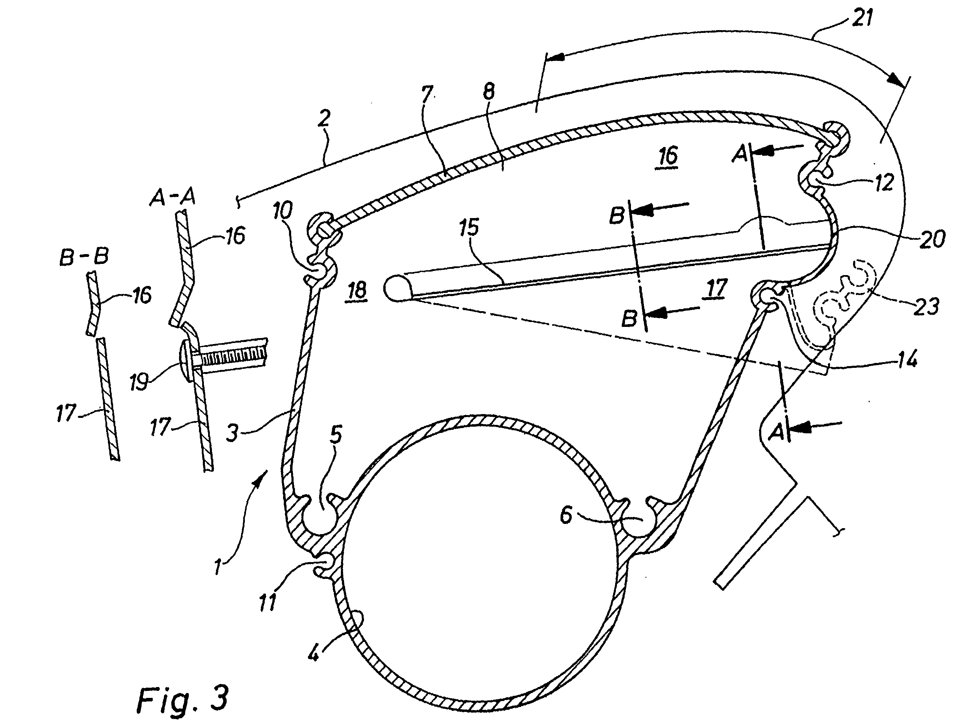

Die in Figur 3 dargestellte Ausführungsform eines erfindungsgemäßen Airbagmodulgehäuses 1 unterscheidet sich von den vorab beschriebenen Ausführungsformen dadurch, dass der Teil 17 des Seitendeckels 8 an seinem zu der Ausbuchtung 20 gerichteten Rand zusätzlich an dem Gehäusegrundkörper 3 befestigt ist. Die Befestigung erfolgt durch eine Schraube 19, die in einer länglichen Ausnehmung 14 des Gehäusegrundkörpers 3 aufgenommen ist. Selbstverständlich ist in dem Seitendeckel 8 an der entsprechenden Stelle ein Durchgangsloch für die Schraube vorgesehen. Diese Ausführungsform hat den Vorteil, dass der Teil 17 des Seitendeckels 8 bei einer Verformung des Teils 16 in Position bleibt.

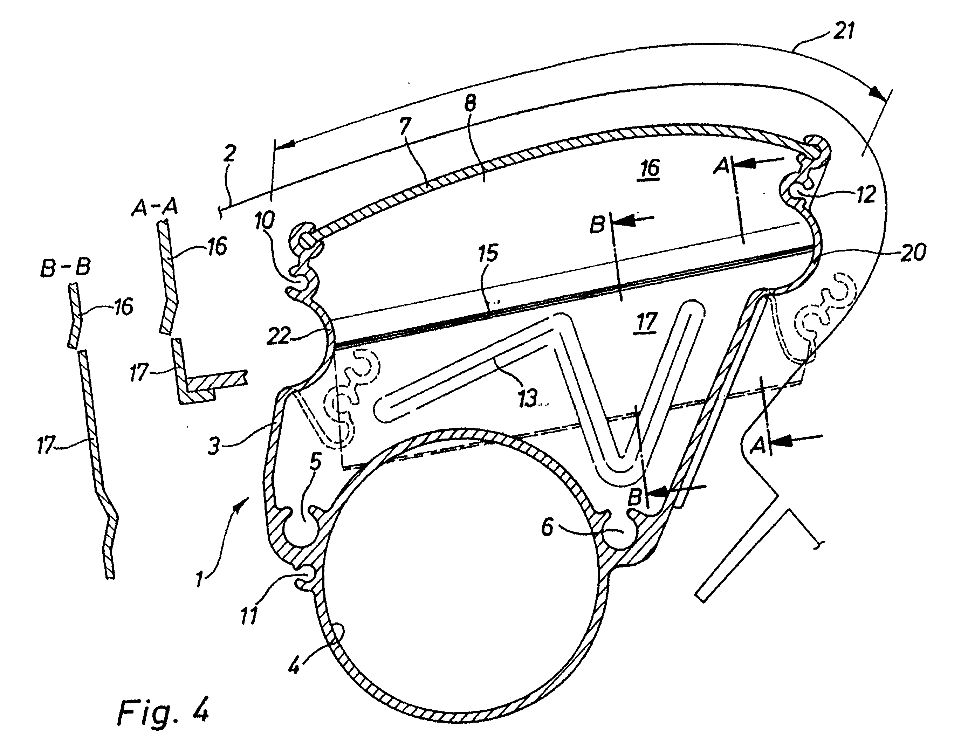

Die in Figur 4 dargestellte Ausführungsform eines erfindungsgemäßen Airbagmodulgehäuses 1 unterscheidet sich dadurch von den vorangegangenen Ausführungsformen, dass in dem Seitendeckel 8 ein durchgehender Schlitz 15 angebracht ist. D.h. der Bereich 18, der die beiden Teile 16 und 17 des Seitendeckels 8 miteinander verbindet, entfällt. Der Gehäusegrundkörper 3 ist im Bereich des Schlitzes 15 zusätzlich zu der Ausbuchtung 20 noch mit einer Ausbuchtung 22 versehen. Zum besseren Verständnis ist die verformte Stellung der Ausbuchtungen gestrichelt angedeutet.

## Patentansprüche

1. Airbagmodulgehäuse für ein Kraftfahrzeug, mit einem länglichen Gehäusegrundkörper (3) der zur Aufnahme eines Gasgenerators und eines Airbags dient und der seitlich durch zwei Seitendeckel (8) verschlossen ist, wobei das Airbagmodulgehäuse (1) beim Aufprall eines Körperteils, insbesondere des Kopfes, eines Fahrzeuginsassen verformt wird, wobei in den Seitendeckeln (8) jeweils mindestens ein Schlitz (15) angebracht ist, der sich im Wesentlichen senkrecht zur erwarteten Aufprallrichtung des Körperteils über den größten Teil des jeweiligen Seitendeckels (8) bis zum Rand erstreckt,
**dadurch gekennzeichnet,**
**dass** der Schlitz (15) durch zwei dicht aneinander anliegende Kanten derart gebildet ist, dass bei Verformung der Seitendeckel (8) ein oberhalb des Schlitzes (15) angeordneter Teil (16) über einen unterhalb des Schlitzes (15) angeordneten Teil (17) gleitet.

2. Airbagmodulgehäuse nach Anspruch 1,
**dadurch gekennzeichnet,**
**dass** der Schlitz (15) durchgehend ausgebildet ist.

3. Airbagmodulgehäuse nach Anspruch 1,
**dadurch gekennzeichnet,**
**dass** die Seitendeckel (8) an einer Seite, vorzugsweise an der dem Gasgenerator abgewandten Seite des Schlitzes (15), leicht abgewinkelte Abschnitte aufweisen.

4. Airbagmodulgehäuse nach Anspruch 1,
**dadurch gekennzeichnet,**
**dass** der Querschnitt des Gehäusegrundkörpers (3) auf der Höhe des Schlitzes (15) in den Seitendeckeln mindestens eine Ausbuchtung (20, 22) aufweist.

5. Airbagmodulgehäuse nach Anspruch 1,
**dadurch gekennzeichnet,**
**dass** die Wanddicke im Bereich der Ausbuchtung (20, 22) reduziert ist.

6. Airbagmodulgehäuse nach Anspruch 1,
**dadurch gekennzeichnet,**
**dass** die Seitenteile (8) mit Hilfe von Schrauben oder Nieten an dem Gehäusegrundkörper (3) befestigt sind.

## Claims

1. An airbag module housing for a motor vehicle having an oblong basic housing body (3) which serves to receive a gas generator and an airbag and which is closed laterally by two lateral covers (8), said airbag module housing (1) being deformed upon impact with a body part, in particular the head, of a vehicle passenger and there being provided in each lateral cover (8) at least one slit (15) which extends essentially vertically in the expected direction of impact of the body part over the largest part of the relevant lateral cover (8) to the edge,
**characterised in that**
the slit (15) is formed by two tightly abutting edges in such a manner that when the lateral covers (8) are deformed a part (16) positioned above the slit (15) slides over a part (17) positioned below the slit (15).

2. An airbag module housing in accordance with claim 1,
**characterised in that**
the slit (15) passes right through the lateral cover (8).

3. An airbag module housing in accordance with claim 1,
**characterised in that**
the lateral covers (8) have slightly angled sections on one side, preferably on the side of the slit (15) facing away from the gas generator slit (15).

4. An airbag module housing in accordance with claim 1,
**characterised in that**
the cross-section of the basic housing body (3) has at least one outward curve (20, 22) at the level of the slit (15) in the lateral covers.

5. An airbag module housing in accordance with claim 1,
**characterised in that**
the wall thickness is reduced in the area of the outward curve (20, 22).

6. An airbag module housing in accordance with claim 1,
**characterised in that**
the side parts (8) are fixed to the basic housing body (3) by means of screws or rivets.

## Revendications

1. Boîtier de module de coussin gonflable de sécurité pour un véhicule automobile, comprenant un corps de base (3) de boîtier longitudinal qui sert à recevoir un générateur à gaz et un coussin gonflable de sécurité et qui est fermé latéralement par deux couvercles latéraux (8), le boîtier de module de coussin gonflable de sécurité (1) étant déformé dans le cas d'un impact sur une partie du corps, en particulier la tête, d'un passager du véhicule, respectivement au moins une fente (15) étant aménagée dans les couvercles latéraux (8), laquelle fente s'étend sensiblement perpendiculairement à la direction attendue de l'impact de la partie du corps sur la plus grande partie du couvercle latéral (8) respectif jusqu'au bord,
**caractérisé en ce que**
la fente (15) est formée par deux arêtes adjacentes de telle sorte que lors d'une déformation des couvercles latéraux (8), une partie (16) disposée au-dessus de la fente (15) glisse sur une partie (17) disposée au-dessous de la fente (15).

2. Boîtier de module de coussin gonflable de sécurité selon la revendication 1,
**caractérisé en ce que**
la fente (15) est réalisée de manière continue.

3. Boîtier de module de coussin gonflable de sécurité selon la revendication 1,
**caractérisé en ce que**
les couvercles latéraux (8) comprennent sur un côté, de préférence sur le côté de la fente (15) opposé au générateur à gaz, des sections légèrement coudées.

4. Boîtier de module de coussin gonflable de sécurité selon la revendication 1,
**caractérisé en ce que**
la section transversale du corps de base (3) du boîtier comprend au moins une courbure (20, 22) à hauteur de la fente (15) dans les couvercles latéraux.

5. Boîtier de module de coussin gonflable de sécurité selon la revendication 1,
**caractérisé en ce que**
l'épaisseur de la paroi dans la région de la courbure (20, 22) est réduite.

6. Boîtier de module de coussin gonflable de sécurité selon la revendication 1,
**caractérisé en ce que**
les éléments latéraux (8) sont fixés sur le corps de base (3) du boîtier à l'aide de vis ou de rivets.
